# EUROPEAN PATENT APPLICATION

(11) **EP 1 122 947 A2**
(43) Date of publication of application: **08.08.2001**
(21) Application number: 01300269.6
(22) Date of filing: 12.01.2001
(51) Int. Cl.: H04N 5/445

(54) **Improvements to receiver user interface**

(30) Priority: 13.01.2000 GB 0000586; 13.01.2000 GB 0000587
(71) Applicant: Pace Micro Technology PLC, Shipley, West Yorkshire BD18 3LF (GB)
(72) Inventor: Moir, Mark, Waterbeach, Cambridge CB5 9QF (GB)
(74) Representative: Wood, Graham

(57) **Abstract**

The invention relates to apparatus including a display screen and receiver apparatus for the reception of broadcast data from a remote location. The receiver is typically provided with a range of user selectable options which are selectable with reference to a display generated on screen. The invention allows for the generation of a number of displays of options and, furthermore for the generation of at least one display icon to indicate that further displays of options are available to be viewed thereby ensuring that the viewer can be aware of and view all of the available options. In a further embodiment a second set of icons are generated for those options in the first display which can be selected and the icons in the second set are each positioned with respect to an available icon in the display and indicate the action required by the user to select the said option.

## Description

The invention to which this application relates is to improvements in the user interface for a receiver and/or processor of digital data which is broadcast to the receiver and which the receiver, in turn, processes into video and/or audio and/or text format and which can then be displayed on a display screen, such as that of a television. In one embodiment the receiver can be provided as an integral part of the television set.

As the utilisation of receiver apparatus for the reception of digital data increases so the range of uses to which the receiver and associated apparatus can be put increases. In turn, as the range of uses increases so there is required to be provided to the user the ability to control and select the uses and functions of the apparatus. Conventionally the user can use a remote control device which typically includes a range of numbered buttons 0-9 and further buttons which are provided to undertake designated function controls of the apparatus and which include groups of buttons, such as "fasttext buttons", a group of different coloured buttons which allow the control, by depression of the appropriate coloured button, of a function identified on an on screen display in association with a suitable colour. As part of this selection process there is a need to display to the user, via the display screen, the range of options which the user can select to change the function of the apparatus. In one embodiment the options are visually displayed in the form of a toolbar. However in many instances there is insufficient display space and /or display clarity to allow the visual icons for the options to be sufficiently clearly displayed and for all of the icons to be displayed on the same screen display. For this reason it is commonly the case that to allow all of the options in the range to be shown, a number of toolbar displays are required to be generated, each showing a subset of the range of selectable options.

A further problem is with the use of groups of buttons to select a range of options such as for example the use of fasttext buttons. When the receiver apparatus and/or television is provided with the ability to allow the user to use the fasttext buttons to select a function from a number of displayed function icons there is a need for the colours of the fasttext buttons to be displayed in relationship with the available functions on the display screen to enable the user to know what to do to generate the selection.

The conventional solution to this problem is to create a display in which each of the functions is represented by a display icon which includes the appropriate fasttext key colour as part of the icon. However this presents a problem if one or a number of the functions is not available or cannot be selected by the use of the fasttext key in particular instances. This can lead to the user believing that the remote control, receiver or other apparatus is not functioning correctly. At the present time this problem is attempted to be solved by the generation and storage in memory means in the receiver of two sets of display icons, one set including fasttext or other control button indicators and another set not including the indicators. However this is problematic in that it requires a significant increase in the graphics memory required to be provided in the receiver to store the duplicate sets of display icons.

A first aim of the present invention is to provide a system whereby if more than one display is required to be generated on screen to represent a range of selectable options then this is detected by the apparatus and indicated to the user of the device to ensure that they are aware of all of the selectable options available and can access the displays which show the same. A further aim of the present invention is to overcome the problems discussed above and provide a system for the utilisation of the fasttext or other identified buttons on a remote control device to allow the user selection of one of a range of functions displayed on screen.

In a first aspect of the invention there is provided a display screen connected to a receiver for receiving data which is broadcast from a remote location, said receiver controllable to perform a range of functions and/or modes, and provided with means to generate a display on the display screen to allow the user to select one of a range of displayed options by the generation of an appropriate signal from a control device to the apparatus, and characterised in that if a plurality of said displays are required to be generated each displaying a subset of options from the range of options then a visual indication is generated to indicate this and the arrangement of the displays with reference to each other to the user and the display includes a user selectable option to select to view one or a number of the other displays.

In one embodiment the visual icon to indicate the plurality of displays is selectable as an option by the user and, when selected, causes the generation of the next display of options and continued selection of the option allows the user to view all of the available displays and hence all of the options in that range. Alternatively the indicator can be provided with another button to allow the selection to view further displays. Typically when a new display is selected to be shown this will replace the previous display so that only one of the displays is shown at any one time.

In one embodiment not all of the icons displayed in the range of options may be selectable by the user and additional indicators are provided to indicate those which can be selected by the user and how the selection can be made. Typically the visual displays are arranged in a hierarchical structure and in one form the icon generated to indicate the number of displays available indicates the position of the display shown at that time with respect to the remaining displays in the structure.

In a typical embodiment, the user generates the control signal by using a remote control device to send an infra red signal indicative of the selection made by the user to the receiver apparatus and which causes the selected option to be performed by the apparatus.

In a further aspect of the invention there is provided a display screen connected to a receiver for receiving data which is broadcast from a remote location, said receiver controllable to perform a range of functions and/or modes, and provided with means to generate a display on the display screen to allow the user to select one of a range of options by the generation of an appropriate signal from a control device to the apparatus, and the receiver includes a means for detecting the number of options available in the range, compiling an option display toolbar, comparing the number of option icons which can be displayed in the toolbar with the number in the range and, if required, generating a plurality of display toolbars for user selection for display on screen, each toolbar displaying a subset of the option icons so that there are sufficient display toolbars to allow the display of icons for all of the options in the range and generating a display icon to indicate to the user that there are a plurality of display toolbars for the range of options available for user selection for display.

Typically one of the toolbar displays is displayed on screen at any one time and the selection of the appropriate control signal by the user removes one toolbar display and replaces it with the next toolbar in the series of toolbar displays and so on until all of the options in the range have been displayed.

In accordance with the invention the user is made aware of the fact that there may be more selectable options available in a range than are displayed on the display screen by the display icon which is generated and they can then select to view some or all of the further options in the range.

In a further aspect of the invention there is provided a display screen connected to a receiver for receiving data which is broadcast from a remote location, said receiver controllable to perform a range of functions and/or modes, and provided with means to generate a display on the display screen to allow the user to select one of a range of functions or modes by the generation of an appropriate signal from a control device to the apparatus, and wherein the display includes a first set of display icons, each representing one of the selectable functions or modes in the range and positioned with respect to a second set of icons indicating to the user the appropriate indicator required to be selected by the user to generate the appropriate control signal to make the required selection.

In one embodiment not all of the icons displayed in the first set are selectable and only those which are selectable are positioned with respect to an appropriate icon from the second set.

In a typical embodiment the user generates the control signal by using a remote control device of conventional form which can send an infra red signal indicative of the selection made by the user to the receiver apparatus and which causes the selected function or mode to be performed by the apparatus.

In a further feature of the invention the icons in the first set are displayed each time that particular range of selectable features is displayed on screen but the icons of the second set can be switched on or off dependent on the condition of the apparatus at the time of display so that if for example, a function indicated by an icon in the first set is selectable by say the red fasttext button on the remote control at one time of display, that icon will be displayed in the first set and the red icon displayed adjacent thereto in the second set of icons. However on a subsequent display of said first set of icons, but when the apparatus is in a different condition and the said function cannot be selected by the user, the icon in the first set is still displayed but the red icon of the second set is not displayed.

Although the invention is particularly well suited to the use of the coloured fasttext keys of the remote control device it should be appreciated that the second set of icons can include icons representative of any of the buttons of the remote control device.

In a further aspect of the invention there is provided a display screen connected to a receiver for receiving data which is broadcast from a remote location, said receiver controllable to perform a range of functions and/or modes, and provided with means to generate a display on the display screen to allow the user to select one of a range of functions or modes by the generation of an appropriate signal from a control device to the apparatus, and the display includes a first set of display icons, each representing one of the selectable functions or modes in the range and positioned with respect to a second set of icons indicating to the user the appropriate indicator required to be selected by the user to generate the appropriate control signal to make the required selection and characterised in that the selection process is undertaken by the apparatus prior to the display of the second set of icons to determine which of the functions of the first set of icons are available for display and only those icons from the second set which match the functions which are available for selection are displayed.

In accordance with this feature of the invention the need for the function or mode icons to include an indication of the selection indication is removed and there is no need for a duplicate icon to be generated and stored so that the graphics memory required to be provided is greatly reduced with respect to the conventional system.

Specific embodiments of the invention are now described with respect to the accompanying diagrams; wherein
Figure 1 illustrates a number of displays which are generated to show to the user a range of options in accordance with one aspect of the invention; and
Figure 2 illustrates a display which can be generated in accordance with another aspect of the invention.

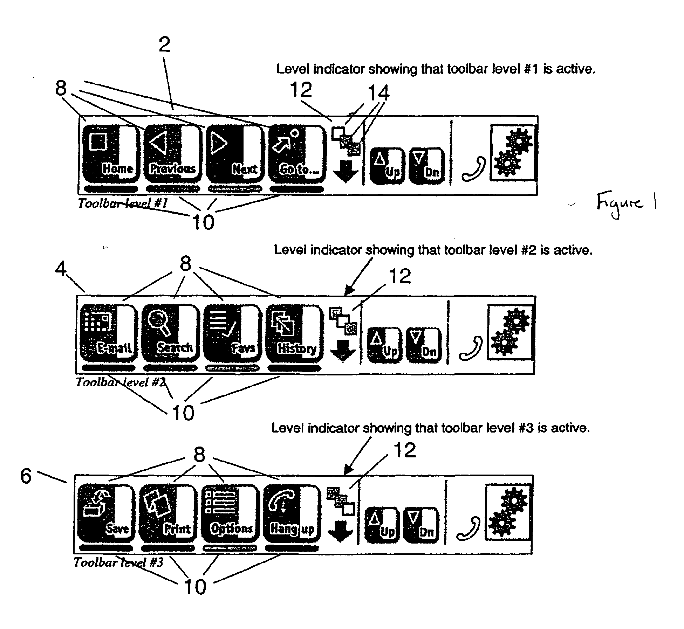

Referring firstly to Figure 1 three display toolbars 2, 4, 6 are shown on a display screen with, in this embodiment, the receiver and data processing apparatus connected to the display screen and functioning in an internet web browser format. However the invention can be used when the apparatus is in any of a number of possible operating formats such as providing television programme information, home shopping information or the like.

In Figure 1 each display toolbar includes a set of icons 8, each representing an option from the range of options which may be selected by the user. It will be seen how in this embodiment each of the display toolbars includes four selectable option icons so that there are, in total, twelve options in this particular range of options. However in practice not all twelve icons can be displayed at the one time in the toolbar format each of the three toolbar displays shows a subset of four of the options.

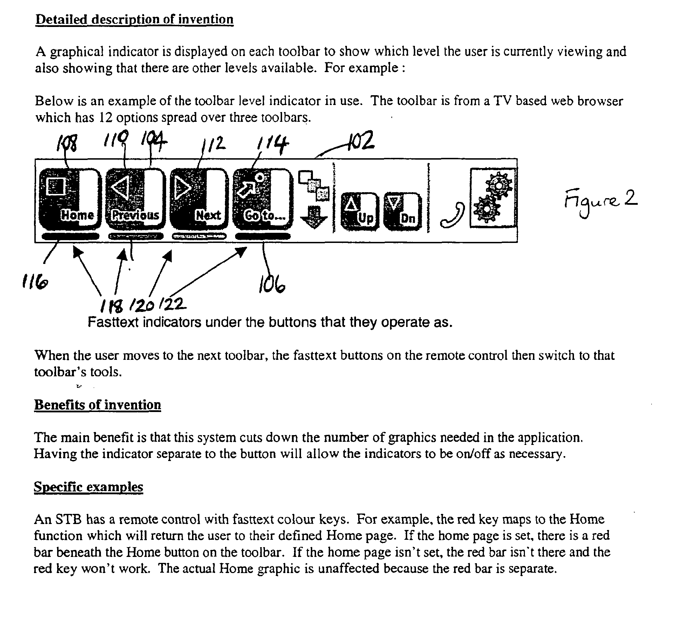

In addition a second set of icons 10 are shown which indicate to the user those options which can be selected and also the manner in which the same can be selected and this feature is the subject of discussion with respect to Figure 2.

In practice, when a user chooses an option, only one of the display toolbars will be shown on screen, typically that toolbar which is first in the hierarchical structure, so in this case display toolbar 2 would be shown. As the user only sees the display 2 on screen initially at a time a further option icon 12 is generated. This informs the user, firstly that there are other display toolbars 4,6 which are available to show further options in the range and secondly the number of displays, in this case there are three. Furthermore the highlighting of one of the three blocks 14 indicates the position of the display toolbar which is being shown with respect to the other display toolbars available in the hierarchical structure.

Upon selection of the appropriate control signal with respect to the icon 12 by the user, the user can choose to display any of the other display toolbars 4,6 and hence replace the display toolbar 2 on screen with the newly selected toolbar and, so in due course look at all of the available options in the range of options. Thus in practice, the receiver and processing means will generate as many display toolbars as required to allow all of the options in a range of options of which they are aware to be available for display. In a further feature of the invention, the processing means may be provided with predetermined orders of display of the options to suit user and/or apparatus requirements.

In Figure 2 there is shown a display which is generated on a display screen with, in this embodiment, the receiver and data processing apparatus connected to the display screen in an internet web browser format. However, again, the invention can be used when the apparatus is in any of a number of possible operating formats. In the Figure there is shown a toolbar 102 which comprises a first set of icons 104 and a second set of icons 106. In the first set, the icons are provided to indicate a range of functions which are available to the user and in this case show the functions of HOME 108, PREVIOUS 110, NEXT 112, and GO TO 114. These are functions which in the diagram are each available for selection by the user. This is indicated to the user by the provision of the second set of icons with an icon 116-122 positioned adjacent each of the icons 108-114 as shown. Furthermore, the second set of icons indicate to the user, in this case in terms of the appropriate colour of fasttext button, what the user has to do to select a particular function.

The diagram shows one toolbar from a range of three toolbars.

In one example, if the user selects the HOME icon 108 by depressing the appropriate fasttext button indicated by the icon 116 then the screen returns to the previously set HOME page. However if there is no previously set home page available, the processing means is aware of this and so, while the HOME icon 108 would still be displayed, the icon 116 would not be displayed thus showing that the user cannot select the function. This therefore means that the icons in the first set can always be displayed and there is no need for duplicate sets of icons to be stored and it is the selection of whether to display an icon from the second set of icons by the processing apparatus with reference to the availability of the functions displayed in the first set of icons which allows the improvements of the current invention to be achieved. Thus, if, for example, three of the four displayed icons of the first set can be selected by the user, then the processing means will choose to generate for display the appropriately positioned three icons from the second set of icons to indicate to the user the three options which are available, and the action required to be taken by the user to select each of the three options.

## Claims

1. Apparatus comprising a display screen connected to a receiver for receiving data which is broadcast from a remote location, said receiver controllable to perform a range of functions and/or modes, and provided with means to generate a display on the display screen to allow the user to select one of a range of displayed options by the generation of an appropriate signal from a control device to the apparatus, and characterised in that if a plurality of said displays are required to be generated each displaying a subset of options from the range of options then a visual indication is generated to indicate this and the arrangement of the displays with reference to each other to the user and the display includes a user selectable option to select to view one or a number of the other displays.

2. Apparatus according to claim 1 characterised in that the visual icon of the plurality of displays is selectable as an option by the user and, when selected, causes the generation of a further subset display of options.

3. Apparatus according to claim 2 characterised in that the continued selection of the visual icon option allows the user to view all of the available option subset displays, with one replacing the previous display and so on.

4. Apparatus according to claim 1 characterised in that the visual displays are arranged in a hierarchical structure.

5. Apparatus according to claim 4 characterised in that the icon generated to indicate the number of displays available indicates the position of the display shown at that time with respect to the remaining displays in the structure.

6. Apparatus according to claim 1 characterised in that not all of the visual indications displayed in the range of options may be selectable by the user and additional icons are provided to indicate those which can be selected by the user and how the selection can be made.

7. Apparatus according to claim 1 characterised in that the user generates the control signal by using a remote control device which can send an infra red signal indicative of the selection made by the user to the receiver apparatus and which causes the selected option to be performed by the apparatus.

8. Apparatus comprising a display screen connected to a receiver for receiving data which is broadcast from a remote location, said receiver controllable to perform a range of functions and/or modes, and provided with means to generate a display on the display screen to allow the user to select one of a range of options by the generation of an appropriate signal from a control device to the apparatus, and the receiver includes a means for detecting the number of options available in the range, compiling an option display toolbar, comparing the number of option icons which can be displayed in the toolbar with the number in the range and, if required, generating a plurality of display toolbars for user selection for display on screen, each toolbar displaying a subset of the option icons so that there are sufficient display toolbars to allow the display of icons for all of the options in the range and generating a display icon to indicate to the user that there are a plurality of display toolbars for the range of options available for user selection for display.

9. Apparatus according to claim 8 characterised in that one of the toolbar displays is displayed on screen at any one time and the selection of the appropriate control signal by the user removes one toolbar display and replaces it with the next toolbar display in the series of toolbar displays and so on until all of the options in the range have been displayed.

10. Apparatus comprising a display screen connected with a receiver for receiving data which is broadcast from a remote location, said receiver controllable to perform a range of functions and/or modes, and provided with means to generate a display on the display screen to allow the user to select one of a range of functions or modes by the generation of a signal using an appropriate indicator on a control device to the apparatus, and characterised in that the display includes a first set of display icons, each representing one of the selectable functions or modes in the range and positioned with respect to a second set of icons to indicate to the user the appropriate indicator required to be selected by the user on the control means to generate the appropriate control signal to make the required selection.

11. Apparatus according to claim 10 characterised in that not all of the icons displayed in the first set are selectable and only those which are selectable are positioned with respect to an appropriate icon from the second set.

12. Apparatus according to claim 10 characterised in that the user generates the control signal by using a remote control device to send an infra red signal indicative of the selection made by the user to the receiver apparatus and which causes the selected function or mode to be performed by the apparatus.

13. Apparatus according to claim 10 characterised in that the icons in the first set are displayed each time that particular range of selectable features is displayed on screen but the icons of the second set can be switched on or off dependent on the condition of the apparatus at the time of display.

14. Apparatus according to claim 10 characterised in that the second set of icons relate to and indicate which of, the coloured or fasttext buttons on the remote control device should be used to select the respective option of the first set of icons.

15. Apparatus comprising a display screen connected to a receiver for receiving data which is broadcast from a remote location, said receiver controllable to perform a range of functions and/or modes, and provided with means to generate a display on the display screen to allow the user to select one of a range of functions or modes by the generation of an appropriate signal from a control device to the apparatus, and the display includes a first set of display icons, each representing one of the selectable functions or modes in the range and positioned with respect to a second set of icons indicating to the user the appropriate indicator required to be selected by the user to generate the appropriate control signal to make the required selection and a selection process is undertaken by the apparatus prior to the display of the second set of icons to determine which of the functions of the first set of icons are available for display and only those icons in the second set which match with functions which are available for selection are displayed.
